(19) **Europäisches Patentamt / European Patent Office / Office européen des brevets**

(11) **EP 4 362 201 A1**

(12) # EUROPEAN PATENT APPLICATION

(43) Date of publication:
01.05.2024 Bulletin 2024/18

(21) Application number: 23206553.2

(22) Date of filing: 27.10.2023

(51) International Patent Classification (IPC):
$H01M\ 50/489^{(2021.01)}$   $H01M\ 50/491^{(2021.01)}$
$H01M\ 50/403^{(2021.01)}$   $H01M\ 50/406^{(2021.01)}$
$H01M\ 10/42^{(2006.01)}$   $H01M\ 10/052^{(2010.01)}$

(52) Cooperative Patent Classification (CPC):
H01M 50/406; H01M 10/052; H01M 10/4235;
H01M 50/403; H01M 50/489; H01M 50/491

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.10.2022 KR 20220141643

(71) Applicant: SK On Co., Ltd.
Seoul 03161 (KR)

(72) Inventors:
• HWANG, Chang Mook
34124 Daejeon (KR)
• KIM, Hyun Ji
34124 Daejeon (KR)
• LEE, Jong Hyeok
34124 Daejeon (KR)
• JO, Yoon Ji
34124 Daejeon (KR)

(74) Representative: Stolmár & Partner
Patentanwälte PartG mbB
Blumenstraße 17
80331 München (DE)

(54) **SEPARATOR FOR SECONDARY BATTERY, MANUFACTURING METHOD THEREOF, AND LITHIUM SECONDARY BATTERY**

(57)    Provided are a separator for a secondary battery, a manufacturing method thereof, and a lithium secondary battery including the same, having appropriate porosity and an appropriate pore size to lead to excellent strength and safety, and having excellent ion conductivity and resistance characteristics due to interconnected pore passages.

In the separator for a secondary battery, an $R_S$ value represented by Equation 1 below is greater than 5 and less than 10.

in Equation 1, $R_S$ denotes a separator performance index, P denotes an average porosity value (%) of the separator, D denotes an average pore diameter value ($\mu$m) of the separator, and G denotes an air permeability value (sec/100cc) of the separator.

<Equation 1>

FIG. 1C

EP 4 362 201 A1

**Description**

**BACKGROUND**

**1. FIELD**

The technology and example embodiments disclosed in the patent document relate to a separator for a secondary battery, a manufacturing method thereof, and a lithium secondary battery, and, in particular, to a separator for a secondary battery, a manufacturing method thereof, and a lithium secondary battery, having excellent strength, stability and ion conduction characteristics by appropriately adjusting a pore shape.

**2. DESCRIPTION OF THE RELATED ART**

Recently, as interest in environmental issues has increased, research into eco-friendly transportation means such as electric vehicles (EV) and hybrid electric vehicles (HEVs) that can replace fossil fuel-powered vehicles is being actively undertaken, and a lithium secondary battery is mainly used as a power source of the eco-friendly transportation means. The lithium secondary battery generally includes a cathode, an anode, a separator, and electrolyte.
The separator is interposed between the cathode and the anode to electrically insulate the cathode and the anode from each other, and refers to a porous membrane through which ions included in the electrolyte selectively pass. Generally, the separator is required to have characteristics such as 1) thinness, 2) high strength, 3) electrochemical stability, 4) thermal stability, and 5) a microporous structure. Among the characteristics, the "microporous structure" denotes porous structure characteristics that may occur when the separator has high porosity and a small and uniform pore size. In general, with an increase in the "porosity" and "pore size," an electrolyte content increases, thus easily moving ions through the separator, but, in this case, since lithium dendrite formed on a surface of the anode is vulnerable to growth, there may be a problem in safety of the separator. Furthermore, when the pore size becomes too large, since the size of the pores may be greater than the size of a transition metal, there may be a problem in that a transition metal other than the lithium metal passes through the separator. Accordingly, there may be a need for the development of a separator for a secondary battery having a microporous structure that can ensure both ion conduction characteristics and safety at an excellent level.

**SUMMARY**

An aspect of the technology disclosed in this patent document is to provide a separator for a secondary battery having a pore shape different from that of a conventional separator and excellent ion conductivity and safety, and a lithium secondary battery including the same.
Another aspect of the technology disclosed in this patent document is to provide a manufacturing method of a separator for a secondary battery configured to appropriately adjust porosity and a pore size, and change a pore shape.
A separator for a secondary battery according to an embodiment, wherein an $R_S$ value represented by Equation 1 below is greater than 5 and less than 10,

<Equation 1>

$$R_S = \frac{P}{D \times G}$$

in Equation 1, $R_S$ denotes a separator performance index, P denotes an average porosity value (%) of the separator, D denotes an average pore diameter value ($\mu$m) of the separator, and G denotes an air permeability value (sec/100cc) of the separator.
The average porosity value P of the separator for a secondary battery is 30 to 70%.
The average pore diameter D of the separator for a secondary battery is 0.01 $\mu$m to 0.05 $\mu$m.
The air permeability value G of the separator for a secondary battery is 10 to 240 sec/100cc.
A thickness of the separator for a secondary battery is 1 $\mu$m to 50 $\mu$m.
A manufacturing method of a separator for a secondary battery includes: molding a separator manufacturing composition into a separator manufacturing sheet; and applying an ultrasonic treatment to the separator manufacturing sheet.
During the ultrasonic treatment, a frequency is 1 to 100 kHz.
During the ultrasonic treatment, an output power is 50 to 200 W.

During the ultrasonic treatment, an exposure time is 5 to 70 seconds.

During the ultrasonic treatment, speed of ultrasonic waves is 0.1 to 40 mm/s.

A lithium secondary battery includes a separator for a secondary battery according to any one of the above-described embodiments.

According to an embodiment disclosed in this patent document, provided are a separator for a secondary battery and a lithium secondary battery including the same, having appropriate porosity and an appropriate pore size to lead to excellent strength and safety, and having excellent ion conductivity and resistance characteristics due to interconnected pore passages.

According to another embodiment disclosed in this patent document, provided is a manufacturing method of a separator for a secondary battery, which may form a microporous structure such that a separator may have appropriate porosity and an appropriate pore size and each pore has an interconnected shape.

## BRIEF DESCRIPTION OF DRAWINGS

Certain aspects, features, and advantages of the disclosed technology are illustrated by the following detailed description with reference to the accompanying drawings.

FIG. 1A is a schematic diagram schematically illustrating a movement path of ions passing through pores in a conventional separator for a secondary battery.

FIG. 1B is a schematic diagram schematically illustrating a method of forming an interconnected pore shape by applying an ultrasonic treatment when manufacturing a separator for a secondary battery according to an embodiment.

FIG. 1C is a schematic diagram schematically illustrating a pore shape interconnected in a separator for a secondary battery according to an embodiment and a movement path of ions passing therethrough.

FIG. 2A is a view illustrating a pore form of a separator for a secondary battery according to an embodiment, which schematically illustrates a pore form of the separator, in which a frequency of 28 kHz and an output power of 100W are applied during an ultrasonic treatment.

FIG. 2B is a view illustrating a pore form of a separator for a secondary battery according to an embodiment, which schematically illustrates a pore form of the separator, in which a frequency of 50 kHz and an output power of 100W are applied during an ultrasonic treatment.

FIG. 2C is a view illustrating a pore form of a separator for a secondary battery according to an embodiment, which schematically illustrates a pore form of the separator, in which a frequency of 50 kHz and an output power of 500W are applied during an ultrasonic treatment.

## DETAILED DESCRIPTION

In this specification, $R_S$ is a separator performance index set to quantitatively evaluate performance required for a separator and uses an average porosity value P, an average pore diameter value D, and an air permeability value G of the separator as variables, and denotes a performance index newly defined in this specification to more appropriately evaluate the performance of the separator.

As described above, in a microporous structure of a separator used in a lithium secondary battery, generally, as a porosity and a pore size increase, the separator has excellent ion conduction characteristics, but there may be problems in terms of safety. Accordingly, there is need for a separator having a microporous structure capable of improving ion conduction characteristics and resistance characteristics, while maintaining porosity and a pore size within an appropriate range.

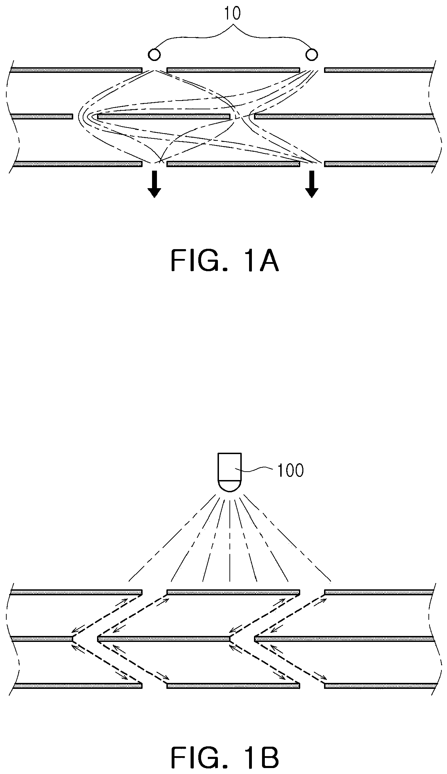

Accordingly, the inventors of the technology disclosed in this patent document confirmed that when pores of a separator having appropriate porosity and an appropriate pore size are interconnected to form a whirlwind (screw)-type passage inside the separator, a separator that can substantially satisfy the aforementioned requirements may be provided. Hereinafter, detailed embodiments of the disclosed technology will be described in detail with reference to FIGS. 1A to 2C.

FIG. 1A is a schematic diagram schematically illustrating a movement path of ions passing through pores in a conventional separator for a secondary battery.

FIG. 1B is a schematic diagram schematically illustrating a method of forming an interconnected pore shape by applying an ultrasonic treatment when manufacturing a separator for a secondary battery according to an embodiment.

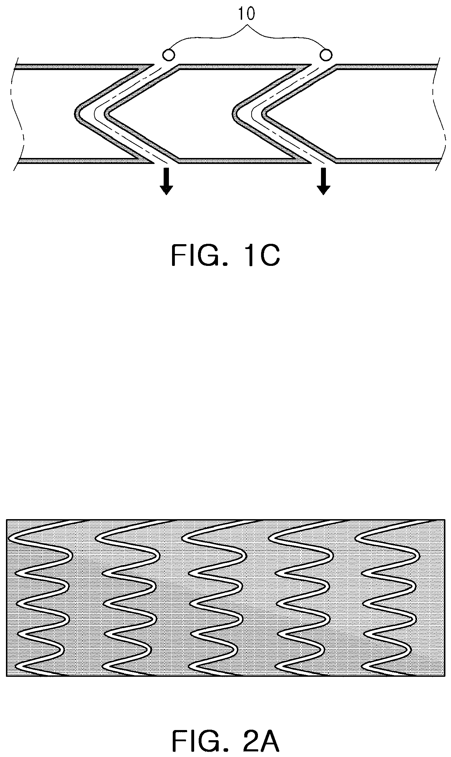

FIG. 1C is a schematic diagram schematically illustrating a pore shape interconnected in a separator for a secondary battery according to an embodiment and a movement path of ions passing therethrough.

FIG. 2A is a view illustrating a pore form of a separator for a secondary battery according to an embodiment, which schematically illustrates a pore form of the separator, in which a frequency of 28 kHz and an output power of 100W are applied during an ultrasonic treatment.

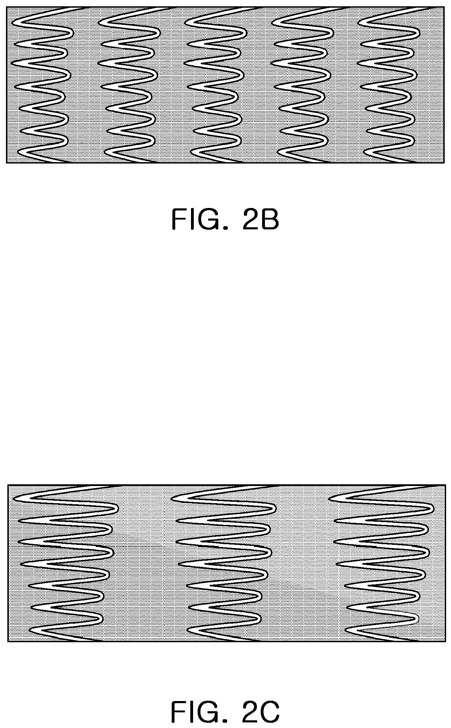

FIG. 2B is a view illustrating a pore form of a separator for a secondary battery according to an embodiment, which schematically illustrates a pore form of the separator, in which a frequency of 50 kHz and an output power of 100W are applied during an ultrasonic treatment.

FIG. 2C is a view illustrating a pore form of a separator for a secondary battery according to an embodiment, which schematically illustrates a pore form of the separator, in which a frequency of 50 kHz and an output power of 500W are applied during an ultrasonic treatment.

## SEPARATOR FOR SECONDARY BATTERY

In a separator for a secondary battery according to an embodiment, an $R_S$ value represented by Equation 1 is greater than 5 and less than 10.

<Equation 1>

$$R_S = \frac{P}{D \times G}$$

In Equation 1, $R_S$ represents a separator performance index, P represents an average porosity value (%) of the separator, D is an average pore diameter value ($\mu$m) of the separator, and G is an air permeability value (sec/100cc) of the separator.

The separator for a secondary battery has appropriate porosity, and a whirlwind (screw)-type passage through which pores having an appropriate size are interconnected is formed in the separator. Accordingly, the separator satisfies the characteristics required for the separator for a secondary battery at the same time and has excellent performance, and a value of the separator performance index $R_S$ described below is controlled within an appropriate range.

The separator performance index $R_S$ is an index set to quantitatively evaluate the performance required for the separator, and uses an average porosity value P, an average pore diameter value D and an air permeability value G of the separator as variables. Accordingly, when the $R_S$ value is appropriately adjusted in consideration of all of porosity, a pore size and ion conduction characteristics of the separator, it may be possible to provide a separator for a secondary battery having excellent performance.

An $R_S$ value of the separator may be 5.3 or more, 5.7 or more, 5.9 or more, 9 or less, 7 or less, and 6.95 or less. When the $R_S$ value of the separator is adjusted to be within the above-described range, the pore size and porosity of the separator are adjusted to be within an appropriate range to maintain excellent safety, thereby further improving the ion conduction characteristics and resistance characteristics of the separator.

The average porosity value P of the separator may be 30% to 70%. Specifically, the average porosity value P of the separator may be 40% to 50%. When the average porosity value of the separator is adjusted to be within the above-described range, the porosity of the separator is adjusted to be high within an appropriate range to increase an electrolyte content, thus ensuring excellent ion conduction characteristics. Furthermore, the porosity may be controlled within a range that is not excessively high, safety may also be ensured by mitigating an occurrence of problems such as tearing of the separator.

The average pore diameter value D of the separator may be 0.01 $\mu$m to 0.05 $\mu$m. Specifically, the average pore diameter value D of the separator may be 0.030 $\mu$m to 0.045 $\mu$m, and may be 0.035 $\mu$m to 0.040 $\mu$m. When the average pore diameter value of the separator is adjusted to be within the above-described range, the ion conduction characteristics of the separator may be secured within an excellent range, and the pore size may be adjusted to be within a range that is not excessively big, thus ensuring cell safety, and it may also be possible to prevent transition metal ions other than lithium ions from passing through the pores.

An air permeability value G of the separator may be 10 to 240 sec/100cc. Specifically, the air permeability value G of the separator may be 100 sec/100cc or more, 150 sec/100cc or more, 170 sec/100cc or more, 235 sec/100cc or less, and 200 sec/100cc or less. As the air permeability value G is an amount of time (sec) it takes for all gases of a certain volume (100cc) to pass through a certain area when gas (generally, air) of a certain volume (100cc) passes through the certain area at a certain pressure, it is typically referred to as a Gurley Number or a Gurley Value, and denotes a value measured by performing a Gurley test by a method such as ASTM D726. A lower air permeability value G denotes that the same amount of gas passes through the separator in a short time, which normally shows that the ion conduction characteristics of the separator are excellent. Accordingly, when the air permeability value of the separator is within the above-described range, the ion conduction characteristics of the separator may be significantly excellent.

A thickness of the separator may be 1 $\mu$m to 50 $\mu$m. Specifically, the thickness of the separator may be 10 $\mu$m to 30 $\mu$m. When the thickness of the separator is within the above-described range, the separator may have high strength, thereby may substantially mitigating an occurrence of tearing due to external impact as well as securing safety. Furthermore, due to a thin thickness of the separator, the energy density and battery capacity of the secondary battery may be improved, and an internal resistance of the battery may also be reduced.

The separator may include a porous substrate, and the porous substrate may be a polyolefin-based porous substrate. The polyolefin-based porous substrate may be a substrate having a plurality of pores and commonly used in electrochemical devices. For example, the polyolefin-based porous substrate may be selected from the group consisting of a polyethylene single layer, a polypropylene single layer, a polyethylene/polypropylene double layer, a polypropylene/polyethylene/polypropylene triple film, and a polyethylene/polypropylene/polyethylene triple film, but the present disclosure is not limited thereto. When the separator includes the above-described porous substrate, the separator may have an excellent shutdown function that prevents a short circuit between a cathode and an anode in the event of abnormal heat generation inside and outside the battery, thus contributing to the improvement of the thermal safety of the battery, and also, the separator may maintain an original state thereof even at high voltages and organic solvents, thus having excellent electrochemical stability.

The separator for a secondary battery may have a cell AC-IR value of 1.3 mΩ or less. Specifically, the separator for a secondary battery may have a cell AC-IR value of 1.28 mΩ or less, 1.25 mΩ or less, 1.23 mΩ or less, 0.1 mΩ or more, and 1 mΩ or more. The cell AC-IR value denotes an impedance resistance value having capacitance of 20Ah and measured with an AC current of 1 kHz at 25°C for a secondary battery cell including the separator for a secondary battery. When the cell AC-IR value of the separator for a secondary battery is within the above-described range, the separator has excellent ion conduction characteristics and low resistance characteristics, which may contribute to improving the performance of a lithium secondary battery.

## MANUFACTURING METHOD OF SEPARATOR FOR SECONDARY BATTERY

A manufacturing method of a separator for a secondary battery according to an embodiment includes: an operation (S1) of molding a separator manufacturing composition into a separator manufacturing sheet; and an operation (S2) of applying an ultrasonic treatment to the separator manufacturing sheet.

In general, a manufacturing method of a separator for a secondary battery using a wet method includes 1) a method (phase 2) of using a separator manufacturing composition including a polymer and a diluent, and 2) a method (phase 3) of using a separator manufacturing composition including a polymer, a diluent, and powder particles. The polymer, diluent, etc., may be subject to roll mixing milling to form a separator manufacturing composition having a single phase, and the separator manufacturing composition may be melted and extruded and may be sheeted and cooled, thus inducing phase-separation. Thereafter, after stretching a phase-separated sheet, the diluent may be extracted, or conversely, the diluent may first be extracted from the phase-separated sheet and may then be stretched and molded in a film shape, and the diluent may be fixed with heat, thereby manufacturing a conventional separator for a secondary battery.

The inventors of the technology disclosed in this patent document confirmed that, when applying additional processing in the manufacturing method of a separator for a secondary battery described above, pores of an appropriate size may be interconnected to each other to manufacture a separator having a whirlwind (screws-type passage formed therein, and confirmed that the separator may have excellent performance by satisfying the characteristics (e.g., safety and ion conduction characteristics) required for a separator for a secondary battery. Hereinafter, a manufacturing method of a separator for a secondary battery according to an embodiment will be described in detail with reference to FIGS. 1A to 1C.

Referring to FIG. 1A, in the case of a microporous structure of the conventional separator for a secondary battery, since lithium ions 10 may pass through a plurality of pores, movement paths thereof may be variously provided. Accordingly, the lithium ions passing through the separator do not move through a preset passage, and move according to an irregularly determined passage. In this case, since no acceleration occurs when the lithium ions move through the separator, there is substantially a limitation to improving the ion transfer speed.

On the other hand, referring to FIGS. 1B to 1C, in the separator for a secondary battery according to an embodiment, pores are interconnected to each other due to the ultrasonic treatment by the ultrasonic treatment device 100 applied during a manufacturing process thereof. Accordingly, whirlwind (screw)-type passages in which the pores thereof are interconnected are formed in the separator, and the lithium ions 10 move through the passages. When the lithium ions rotate and move along the whirlwind (screw)-type passages, rotational acceleration may occur, thereby improving a movement speed of lithium ions. Accordingly, unlike the conventional separator for a secondary battery as illustrated in FIG. 1A, this patent document may provide a separator for a secondary battery having a microporous structure capable of further improving the transfer speed of lithium ions moving fast during fast charging.

When the ultrasonic treatment is applied in the process of manufacturing the separator for a secondary battery, the pores may form passages interconnected with each other while minimizing the effect on porosity and a pore size. In this case, the shape of the pores and passages may be controlled differently depending on the ultrasonic treatment conditions, and accordingly, it may be possible to appropriately adjust the performance of a finally manufactured separator according to the purpose and design. Hereinafter, the ultrasonic treatment conditions will be described in detail with reference to FIGS. 2A to 2C.

Referring to FIGS. 2A to 2C, the shapes of the pores and the passages may be differently adjusted according to output power and a frequency during the ultrasonic treatment. Specifically, when the ultrasonic treatments are applied with the same output power of 100W and frequencies thereof are applied differently, the whirlwind (screw) shape of the passage formed in the separator of FIG. 2B subjected to the ultrasonic treatment at a frequency of 50 kHz may be formed to be relatively denser as compared to the separator of FIG. 2A subjected to ultrasonic treatment at a frequency of 28 kHz. Furthermore, when the ultrasonic treatments are applied at the same frequency of 50 kHz but the output power thereof is applied differently, a whirlwind (screw)-type height (or a width) of the passage formed in the separator of FIG. 2C subjected to an ultrasonic treatment at a frequency of 500W may be formed to be relatively further expanded as compared to the separator of FIG. 2B subjected to ultrasonic treatment with the output power of 100W.

In this manner, the shape of the pores and the passages formed in the separator may be adjusted differently according to the ultrasonic treatment conditions, and the ultrasonic treatment conditions may also be adjusted to be within an appropriate range in consideration of the performance of the manufactured separator. Hereinafter, the ultrasonic treatment conditions applied to the manufacturing method of a separator for a secondary battery according to an embodiment will be described in detail.

The frequency during the ultrasonic treatment may be 1 to 100 kHz. Specifically, during the ultrasonic treatment, the frequency may be 10 to 60 kHz, and may be 20 to 30 kHz. Generally, the frequency range of ultrasonic waves may be 20 to 20,000 kHz, but in the technology disclosed in this patent document, a pore shape may be appropriately formed by adjusting the frequency range during the ultrasonic treatment. When the frequency value during the ultrasonic treatment is within the above-described range, the degree to which the whirlwind (screw) shape of the passage formed in the separator is concentrated may be appropriately formed, so that it may be possible for lithium ions to move with excellent rotational acceleration without reducing a movement speed of the lithium ions passing through the passage.

The output power during the ultrasonic treatment may be 50 to 200 W. Specifically, the output power during the ultrasound treatment may be 70 to 150 W, and may be 90 to 110 W. An output power value during the ultrasonic treatment is a decisive factor in uniformly forming a whirlwind (screw)-type pore passage in an upper end and a lower end of the separator. When the output power value during the ultrasonic treatment is excessively small, there is a substantial limitation to forming a whirlwind (screw)-type pore passage through the interconnection between the pores. On the other hand, when the output power is excessively high during the ultrasonic treatment, the pore size may become excessively large to cause problems with the safety of the separator, and a phenomenon of lifting a subject may occur to result in a problem in the process. Accordingly, when the output value during the ultrasonic treatment is within the above-described range, it may be possible to appropriately form an interconnection passage between pores without any process problem within a range in which the size of the pores formed in the separator does not become excessively big.

An exposure time during the ultrasonic treatment may be 5 to 70 seconds. Specifically, the exposure time during the ultrasonic treatment may be 10 to 60 seconds, or may be 20 to 50 seconds. When the exposure time during the ultrasonic treatment is within the above-described range, the interconnection passages between the pores may be formed in a short period of time, thereby ensuring an excellent level of productivity when manufacturing the separator.

During the ultrasonic treatment, the speed of the ultrasonic waves may be 0.1 to 40 mm/s. Specifically, the speed of the ultrasonic waves during the ultrasonic treatment may be 1 to 20 mm/s, 1.5 to 10 mm/s, 2 to 9 mm/s, and 3 to 7 mm/s. When the speed of ultrasonic waves is less than a specific speed, an expected effect through the ultrasonic treatment may be reduced, and when the ultrasonic speed is too high, the interconnection passages between the pores may be improperly formed. Accordingly, when the speed of the ultrasonic waves during the ultrasonic treatment is within the above-described range, the speed of the ultrasonic treatment may be appropriately adjusted, thereby appropriately and sufficiently securing the pore interconnection passage formation time.

A sonication distance during the ultrasonic treatment may be 10 to 1000 mm, 50 to 500 mm, and 70 to 150 mm. During the ultrasonic treatment, as the sonication distance gets longer and longer, the pore interconnection passage may be excellently formed, but process costs may increase, and also, as the sonication distance becomes longer, the improvement of the expected effect may be further reduced. Accordingly, when the sonication distance during the ultrasonic treatment is within the above-described range, the process costs may be adjusted to be within an appropriate range while excellently forming the pore interconnection passages, and accordingly, economic feasibility may be ensured simultaneously with improving the performance of the separator.

The separator manufacturing composition may be a two-phase composition including a polymer and a diluent, or may be a three-phase composition including a polymer, a diluent, and polar powder particles.

The polymer may correspond to a porous substrate including in a finally manufactured separator for a secondary battery, and may be a polyolefin-based polymer. The polyolefin-based polymer may include, for example, any one selected from polyethylene, polypropylene and combinations thereof, but the present disclosure is not limited thereto. When the separator manufacturing composition includes the polymer described above, a microporous structure of a porous substrate included in the separator for a secondary battery may be easily formed, thereby contributing to thermal safety and electrochemical performance improvement of the battery.

The polymer may be included in an amount of 1 to 99 wt% based on the total weight of the separator manufacturing composition. Specifically, the polymer may be included in an amount of 10 to 90 wt%, or 20 to 70 wt%, based on the total weight of the separator manufacturing composition.

The diluent is a thinner and refers to a low molecular weight organic material with a molecular structure similar to that of the polymer included in the separator manufacturing composition. The diluent is not particularly limited as long as it is an organic liquid that forms a single phase with the polymer at an extrusion processing temperature, but, for example, aliphatic hydrocarbons or cyclic hydrocarbons such as Nonane, Decane, Decalin, a paraffin oil, and a paraffin wax; phthalic acid esters such as Dibutyl Phthalate, Dihexyl Phthalate, and Dioctyl Phthalate; fatty acids having 10 to 20 carbon atoms such as a palmitic acid, a stearic acid, an oleic acid, and a linoleic acid; and fatty acid alcohols having 10 to 20 carbon atoms such as palmitate alcohol, stearate alcohol, and oleic acid alcohol; and mixtures thereof may be applied thereto.

The content of the diluent is not particularly limited, but, for example, the content of the diluent may be included in an amount of 20 to 99 wt%, 30 to 80 wt%, or 40 to 60 wt% based on the total weight of the separator manufacturing composition.

The polar powder particles are inorganic powder particles included in a three-phase separator manufacturing composition, and may act as a nucleus for forming pores, thereby contributing to the formation of an excellent microporous structure of the separator. The polar powder particles may be inorganic powder particles having a relatively high dielectric constant value. Specifically, the polar powder particles may have a dielectric constant value of 3 to 5000, and, in particular, 10 to 3000. For example, the polar powder particles may include any one selected from the group consisting of calcium carbonate ($CaCO_3$), silicon dioxide ($SiO_2$), aluminum oxide ($Al_2O_3$), zirconium oxide ($ZrO_2$), hafnium oxide ($HfO_2$), hafnium silicate ($HfSiO_4$), tantalum pentoxide ($Ta_2O_5$), lanthanum oxide ($La_2O_3$), lanthanum aluminate ($LaAlO_3$), niobium pentoxide ($Nb_2O_5$), titanium dioxide ($TiO_2$), barium titanate ($BaTiO_3$), and strontium titanate ($SrTiO_3$).

The polar powder particles may be included in an amount of 20 to 80 wt% based on 100 wt% of the total weight of the polymer and the diluent. Furthermore, the powder particles may be included in an amount of 20 to 50 wt% based on the total weight of the separator manufacturing composition.

The operation SI may be advanced as a process of allowing the separator manufacturing composition to be subject to roll mixing milling, melting and extruding the separator manufacturing composition subject to the roll mixing milling, and molding the separator manufacturing composition into the separator manufacturing. Specifically, the operation SI may be advanced by allowing the separator manufacturing composition to be subject to the roll mixing milling and be melted and extruded using a compound, a roll mixing milling machine, or a mixer. In this case, the polymer, the diluent, etc., may be blended in advance and put into the compounder, or may be input from separated suppliers, respectively.

A temperature at which the separator manufacturing composition is melt and extruded may be 160°C to 250°C, 180°C to 230°C, and 190°C to 220°C. When the temperature is excessively low, the polymer may not be sufficiently melted, which may cause problems in processing and dispersion. On the other hand, when the temperature is excessively high, the polymer may be oxidized by heat, resulting in a decrease in molecular weight and discoloration.

A method of molding the melted and extruded separator manufacturing composition into a separator manufacturing sheet is not particularly limited, and a general casting method or a calendaring method may be used. The extruded sheet may be cooled from 160 to 250°C to room temperature, thereby manufacturing a sheet having a certain thickness.

The separator manufacturing sheet may be cooled at 25 to 60°C before the ultrasonic treatment is applied to the separator manufacturing sheet; simultaneously with applying the ultrasonic treatment; or after the ultrasonic treatment is applied. Accordingly, this may appropriately induce phase separation of components in the separator manufacturing sheet.

The manufacturing method of a separator for a secondary battery may further include an operation S3 of molding the separator manufacturing sheet into a film, and the operation S3 may include a process of stretching the sheet; and a process of extracting the diluent from the sheet. In this case, one of the process of stretching the sheet and the process of extracting the diluent from the sheet may be advanced first, or both thereof may be simultaneously advanced.

The process of stretching the sheet may be advanced through tools such as a tenter and the like, and the tools are not specifically limited as long as they are equipment capable of properly stretching the sheet. Furthermore, in the process of stretching the sheet, the sheet may be stretched 0.1 to 5 times, 0.5 to 3 times, or 0.7 to 1.5 times in a mechanical direction (MD), and the sheet may be stretched 0.5 to 10 times, 1 to 5 times, or 1.1 to 3 times in a width direction TD.

In the process of extracting the diluent, the diluent may be extracted through an organic solvent. The organic solvent may be a polar organic solvent. Specifically, the organic solvent is a polar aprotic organic solvent having a relatively high dielectric constant value, and a dielectric constant value thereof may be 10 to 100. When an organic solvent used in the extraction of the diluent is polar, a whirlwind (screw) type passage in which pores having an appropriate size are interconnected with each other may be more easily formed. Furthermore, when an organic solvent used to extract the diluent is protic, a large amount of hydrogen ions ($H^+$) may be generated due to an organic solvent remaining inside the separator, and hydrofluoric acid (HF) formed by bonding the hydrogen ions with fluorine ions ($F^-$) present inside the secondary battery may destroy a SEI layer on a surface of an electrode, thereby accelerating an occurrence of gas. Accordingly, when the organic solvent used to extract the diluent is aprotic, the amount of gas occurring in the battery may be reduced as described above, so that safety, lifecycle characteristics, and the like, may be excellent.

The polar aprotic organic solvent may include one selected from acetone, chloroacetone, dimethylformamide, and combinations thereof.

In the process of extracting the diluent, an extraction method thereof is not particularly limited, and general solvent extraction methods such as immersion, a solvent spray, ultrasonic, and the like, may be applied respectively or in combination. In this case, the content of the diluent remaining in the separator after the extraction may be 1 wt% or less.

The method of manufacturing a separator for a secondary battery may further include an operation (S4) of heat-fixing the film. In this case, a heat-fixing temperature may be 100°C to 150°C, and a heat-fixing time may be 10 to 180 minutes.

## LITHIUM SECONDARY BATTERY

A lithium secondary battery according to an embodiment includes a separator for a secondary battery according to one of the above-described embodiments. Specifically, the lithium secondary battery includes a cathode and an anode, and may further include the above-described separator for a secondary battery, as a separator interposed between the cathode and the anode.

The cathode may include a lithium-transition metal oxide such as a lithium cobalt oxide ($LiCoO_2$), a lithium manganese oxide ($LiMn_2O_4$), and a lithium nickel oxide ($LiNiO_2$) as active materials, or may include a lithium-transition metal composite oxide in which some of these transition metals are substituted with other transition metals. Specifically, the cathode may include at least one selected from the group consisting of: a lithium-nickel-manganese oxide (LNMO) not including cobalt (Co) as an active material and represented by Chemical Formula such as $LiNi_xMn_{2-x}O_4 (0<x<1)$; a lithium-permanganate oxide (LMR) not including nickel (Ni) and represented by Chemical Formulae such as $Li_{1+x}Mn_{2-x}O_4 (0<x<0.1)$; a nickel-cobalt-manganese oxide (NCM) represented by Chemical Formulae such as $Li_xNi_aCo_bMn_cO_y (0<x\leq1.1, 2\leq y\leq2.02, 0<a<1, 0<b<1, 0<c<1, 0<a+b+c\leq1)$; and a lithium-phosphate-iron oxides (LFP) represented by Chemical Formula such as $LiFePO_4$, but the present disclosure is not limited thereto.

The anode may include at least one selected from carbon-based materials such as natural graphite and artificial graphite and silicon-based materials such as $SiO_x (0<x<2)$ and Si-C, as active materials; one or more metals selected from the group consisting of Li, Sn, Zn, Mg, Cd, Ce, Ni and Fe; alloys consisting of the metals; an oxide of the metals; and composites of the metals and carbon, but the present disclosure is not limited thereto.

The lithium secondary battery may include the above-described separator for a secondary battery between the cathode and the anode. The secondary battery separator has excellent strength, excellent electrochemical/thermal stability, excellent ion conduction characteristics, excellent resistance characteristics, and detailed descriptions thereof will be omitted because they overlap the descriptions described above. The lithium secondary battery including the separator for a secondary battery may have excellent capacity characteristics and excellent resistance characteristics, thereby significantly excellent utilization as power sources for an electric vehicle (EV) and a hybrid electric vehicle (HEV).

Inventive Example and Comparative Example

1) Manufacture of Separator

(1) Inventive Examples 1 to 6

A three-phase separator composition (polymer content in the composition: 20 wt%; diluent content: 47 wt%t; powder particles content: 33 wt%) with 50 parts by weight of $CaCO_3$ added as powder particles was prepared based on 100 parts by weight of a two-phase separator composition in which 30 wt% of polyethylene (PE) was added as a polymer and 70 wt% of paraffin oil was added as a diluent. The separator composition was subject to melting and roll mixing milling at 115°C for 30 minutes at 100 RPM, and extruded at 135°C to manufacture a sheet having a thickness of about 20 $\mu$m. In this process, the sheet was cooled at 60°C for 30 minutes, and an ultrasonic treatment was applied to the sheets for each inventive examples according to the conditions represented in Table 1 below. In this case, the ultrasonic treatment was performed by Ultrasonic. The sheet was biaxially stretched at 115°C by a tenter (TD: 1.3 times, and MD: 0.9 times), and methylene chloride was applied as an organic solvent, thus extracting a diluent from the sheet. Thereafter, the film was heat-fixed at 135°C to manufacture a separator of Inventive Examples 1 to 6 having a thickness of about 20 $\mu$m.

(2) Comparative Examples 1 to 3

A separator of Comparative Example 1 was manufactured in the same manner as Inventive Examples 1 to 6 above, except that the ultrasonic treatment is not applied. Furthermore, separators of Comparative Examples 2 and 3 were manufactured by applying the ultrasonic treatment but applying the conditions shown in Table 1 below.

<Table 1>

| | Frequency (kHz) | Output Power (W) | Exposure Time (s) | Speed (mm/s) | Sonication Distance (mm) |
|---|---|---|---|---|---|
| Inventive Example 1 | 28 | 100 | 5 | 20 | 100 |
| Inventive Example 2 | 28 | 100 | 10 | 10 | 100 |
| Inventive Example 3 | 28 | 100 | 20 | 5 | 100 |
| Inventive Example 4 | 28 | 100 | 50 | 2 | 100 |
| Inventive Example 5 | 40 | 100 | 10 | 10 | 100 |
| Inventive Example 6 | 50 | 100 | 10 | 10 | 100 |
| Comparative Example 1 | | | | | |
| Comparative Example 2 | 28 | 250 | 10 | 10 | 100 |
| Comparative Example 3 | 28 | 500 | 10 | 10 | 100 |

2) Performance Evaluation of Separators

(1) Average Porosity Value P and Average pore diameter value D

An average porosity and a pore average diameter were measured by a porometer (manufactured by PMI Co., Ltd.: CFP 1500-AEL) for the manufactured separator and are shown in Table 2 below.

(2) Air Permeability Value G

The time it takes to pass 100 ml of air by cutting a sample of 5 cm x 5 cm for the manufactured separator was measured through a ventilation measuring device (Gurley-type Densometer; manufactured by Toyoseiki Co., Ltd.), and the ventilation values are shown in Table 2 below.

(3) Resistance Characteristics

A secondary battery cell having capacitance of 20Ah and including the manufactured separator was manufactured, and for the secondary battery cell, impedance resistance values were measured using an AC current of 1 kHz by an insulation resistance tester (HIOKI 3154) at 25°C, and accordingly, the results thereof are shown in Table 2 below.

<Table 2>

| | Thickness ($\mu$m) | Porosity (%) | Pore Average Diameter ($\mu$m) | Air Permeability (sec/100cc) | $R_S$ (%·100cc/ $\mu$m·sec) | Cell Ac-IR (m$\Omega$) |
|---|---|---|---|---|---|---|
| Inventive Example 1 | 20 | 46 | 0.033 | 240 | 5.81 | 1.3 |
| Inventive Example 2 | 20 | 46 | 0.033 | 200 | 6.97 | 1.25 |
| Inventive Example 3 | 20 | 46 | 0.035 | 190 | 6.92 | 1.23 |

(continued)

|  | Thickness (μm) | Porosity (%) | Pore Average Diameter (μm) | Air Permeability (sec/100cc) | $R_S$ (%·100cc/ μm·sec) | Cell Ac-IR (mΩ) |
|---|---|---|---|---|---|---|
| Inventive Example 4 | 20 | 44 | 0.040 | 185 | 5.95 | 1.23 |
| Inventive Example 5 | 20 | 45 | 0.033 | 240 | 5.68 | 1.28 |
| Inventive Example 6 | 20 | 45 | 0.033 | 235 | 5.80 | 1.27 |
| Comparative Example 1 | 20 | 44 | 0.036 | 250 | 5.00 | 1.3 |
| Comparative Example 2 | 20 | 46 | 0.051 | 190 | 4.54 | 1.19 |
| Comparative Example 3 | 20 | 45 | 0.063 | 180 | 4.01 | 1.17 |

Comparing Inventive Examples 1 to 6 and Comparative Example 1, it was found that in the case of Comparative Example 1 in which the ultrasonic treatment was not applied during the manufacturing process, although the average porosity value P and the average pore diameter value D were not significantly different from Inventive Examples 1 to 6, Comparative Example 1 had a relatively high air permeability value G, and accordingly, a value of the separator performance index $R_S$ was also relatively low. Furthermore, since Comparative Example 1 found that since the cell AC-IR value was relatively high, the ion conduction characteristics thereof, etc., were reduced as compared to Inventive Examples 1 to 6. This is determined to be due to the fact that since the ultrasonic treatment was not applied when manufacturing the separator of Comparative Example 1, an interconnection shape between the pores is not formed.

Furthermore, comparing Inventive Examples 1 to 6 and Comparative Examples 2 to 3, it was found that even if the ultrasonic treatment is applied during the manufacturing process, there were differences in the performance of the separator according to the treatment conditions. Specifically, in the case of the separators of Comparative Examples 2 and 3 subjected to the ultrasonic treatment having relatively high output power, it was found that the separators had a relatively large average pore diameter value D, as compared to Inventive Examples 1 to 6, thus showing a low air permeability value G and a low cell AC-IR value and having excellent ion conduction characteristics; however, the average pore diameter value D exceeded 0.05 μm, making it unsuitable for safety, and accordingly, the value of the separator performance index $R_S$ was also relatively low.

In consideration of the results described above, when the ultrasonic treatment is applied based on appropriate conditions in the process of manufacturing the separator, it may be possible to provide a separator for a secondary battery having excellent safety, ion conductivity, and resistance characteristics, and a lithium secondary battery including the same.

**Claims**

1.  A separator for a secondary battery, wherein an $R_S$ value represented by Equation 1 below is greater than 5 and less than 10,

$$<\text{Equation 1}>$$

$$R_S = \frac{P}{D \times G}$$

in Equation 1, $R_S$ denotes a separator performance index, P denotes an average porosity value (%) of the separator, D denotes an average pore diameter value (μm) of the separator, and G denotes an air permeability value (sec/100cc) of the separator.

2. The separator for a secondary battery of claim 1, wherein the average porosity value P is 30 to 70%.

3. The separator for a secondary battery of claim 1 or 2, wherein the average pore diameter D is 0.01 $\mu$m to 0.05 $\mu$m.

4. The separator for a secondary battery of any one of claims 1 to 3, wherein the air permeability value G is 10 to 240 sec/100cc.

5. The separator for a secondary battery of any one of claims 1 to 4, wherein a thickness thereof is 1 $\mu$m to 50 $\mu$m.

6. A manufacturing method of a separator for a secondary battery, comprising:

    molding a separator manufacturing composition into a separator manufacturing sheet; and
    applying an ultrasonic treatment to the separator manufacturing sheet.

7. The manufacturing method of a separator for a secondary battery of claim 6, wherein during the ultrasonic treatment, a frequency is 1 to 100 kHz.

8. The manufacturing method of a separator for a secondary battery of claim 6 or 7, wherein during the ultrasonic treatment, an output power is 50 to 200W.

9. The manufacturing method of a separator for a secondary battery of any one of claims 6 to 8, wherein during the ultrasonic treatment, an exposure time is 5 to 70 seconds.

10. The manufacturing method of a separator for a secondary battery of any one of claims 6 to 9, wherein during the ultrasonic treatment, speed of ultrasonic waves is 0.1 to 40 mm/s.

11. A lithium secondary battery comprising a separator for a secondary battery any one of claims 1 to 5.

FIG. 1A

FIG. 1B

10

FIG. 1C

FIG. 2A

FIG. 2B

FIG. 2C

Europäisches
Patentamt

European
Patent Office

Office européen
des brevets

# EUROPEAN SEARCH REPORT

Application Number

EP 23 20 6553

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H06 345893 A (MITSUBISHI CHEM IND) 20 December 1994 (1994-12-20) | 1-11 | INV. H01M50/489 |
| Y | * page 1, paragraph 0004 - page 5, paragraph 0034; table 1 * ----- | 7-9 | H01M50/491 H01M50/403 H01M50/406 |
| X | US 2015/050545 A1 (MURATA HIROSHI [JP] ET AL) 19 February 2015 (2015-02-19) | 1-6,10, 11 | H01M10/42 H01M10/052 |
| Y | * page 2, paragraph 0036 - page 31, paragraph 0351; figures 1-5; tables 1, 3, 4 * ----- | 7-9 | |

TECHNICAL FIELDS SEARCHED (IPC)

H01M

The present search report has been drawn up for all claims

| Place of search | Date of completion of the search | Examiner |
|---|---|---|
| Munich | 21 March 2024 | Polisski, Sergej |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 6553

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2024

| Patent document cited in search report | Publication date | Patent family member(s) | Publication date |
|---|---|---|---|
| JP H06345893 A | 20-12-1994 | NONE | |
| US 2015050545 A1 | 19-02-2015 | CN 104205419 A | 10-12-2014 |
| | | CN 107053774 A | 18-08-2017 |
| | | CN 107093690 A | 25-08-2017 |
| | | EP 2833439 A1 | 04-02-2015 |
| | | EP 3179535 A1 | 14-06-2017 |
| | | EP 3179536 A1 | 14-06-2017 |
| | | HU E035696 T2 | 28-05-2018 |
| | | HU E051427 T2 | 01-03-2021 |
| | | HU E052426 T2 | 28-04-2021 |
| | | JP 6120828 B2 | 26-04-2017 |
| | | JP 6309661 B2 | 11-04-2018 |
| | | JP 2017140840 A | 17-08-2017 |
| | | JP WO2013147071 A1 | 14-12-2015 |
| | | KR 20140131544 A | 13-11-2014 |
| | | KR 20170034946 A | 29-03-2017 |
| | | KR 20170089031 A | 02-08-2017 |
| | | KR 20170089032 A | 02-08-2017 |
| | | PL 2833439 T3 | 30-04-2018 |
| | | PL 3179535 T3 | 14-12-2020 |
| | | PL 3179536 T3 | 14-06-2021 |
| | | TW 201343408 A | 01-11-2013 |
| | | TW 201713500 A | 16-04-2017 |
| | | US 2015050545 A1 | 19-02-2015 |
| | | US 2017194612 A1 | 06-07-2017 |
| | | US 2017194613 A1 | 06-07-2017 |
| | | WO 2013147071 A1 | 03-10-2013 |

EPO FORM P0459

For more details about this annex : see Official Journal of the European Patent Office, No. 12/82